# EUROPÄISCHE PATENTSCHRIFT

(11) **EP 0 914 794 B1**
(45) Veröffentlichungstag und Bekanntmachung des Hinweises auf die Patenterteilung: **23.04.2003**
(21) Anmeldenummer: 98115907.2
(22) Anmeldetag: 24.08.1998
(51) Int. Cl.: A47L 1/15, A47L 1/06, A47L 13/12, A47L 13/46, B60S 3/04

(54) **Vorrichtung mit einem Fliegenschwamm**
Device with a sponge
Dispositif avec une éponge

(30) Priorität: 06.11.1997 DE 29719588 U
(43) Veröffentlichungstag der Anmeldung: 12.05.1999
(73) Patentinhaber: Tineo-Ade, José, 33428 Marienfeld (DE)
(72) Erfinder: Tineo-Ade, José, 33428 Marienfeld (DE)
(74) Vertreter: Strauss, Hans-Jochen, Dipl.-Phys., Dr.

(56) Entgegenhaltungen:
- DE-U- 9 100 852
- DE-U- 29 511 415
- DE-U- 29 713 472
- US-A- 4 059 864
- US-A- 4 893 370
- US-A- 5 343 586

## Beschreibung

Die Erfindung betrifft eine Vorrichtung bestehend aus einem Fliegenschwamm und einer Halterung, in die der Fliegenschwamm eingespannt ist, wobei an der Halterung ein Griffelement angeordnet ist.

Bei der Verwendung eines Fliegenschwammes, der aus einem grobporigen Material gefertigt ist, wird dieser in der Regel in der Hand geführt, um die auf der Scheibe eines Fahrzeuges haftenden Insektenreste durch reibende Bewegungen zu lösen. Dies stellt ein Problem dar, da es dabei nicht unumgänglich ist, beispielsweise, um die gesamte Flächenscheibe mit dem handgeführten Schwamm zu erreichen, dass bei der Reinigung auf die Stoßstange oder auf den Kühler gestiegen werden muss, um auf diese Weise die gesamte Frontscheibenfläche zu erreichen.

Hierzu wird gemäß dem Gebrauchsmuster DE 295 11 415.0 eine Vorrichtung vorgeschlagen, die aus einer Halterung besteht, in die der Fliegenschwamm einspannbar ist, wobei ein Griffelement an der Halterung des Fliegenschwammes angeformt bzw. angeordnet ist. Die Halterung des Fliegenschwammes an der Vorrichtung erfolgt dabei in der Weise, dass die Halterung aus zwei gegeneinander verschiebbaren Klemmbacken besteht. so dass der Fliegenschwamm zwischen diese Klemmbacken eingesetzt wird, und die Klemmbacken gegeneinander haltend verschraubt werden. Ein wesentlicher Nachteil dieser bekannten Vorrichtung ist es, dass sie aufgrund der beiden Klemmbacken einerseits aufwendig baut, wobei andererseits auch das Einspannen des Fliegenschwammes eine gewisse Geschicklichkeit erfordert, zumal zunächst die beiden Klemmbacken derart gegeneinander zu verschieben sind, dass der Fliegenschwamm eingelegt werden kann, wobei dann die Verspannung über die Verschraubung an der Rückseite der Klemmbacken erfolgt. Dabei kann es vorkommen, dass der Schwamm zu stark eingeklemmt wird und er sich wölbt. Wird hingegen der Fliegenschwamm zu locker verspannt, führt dies dazu, dass der Fliegenschwamm aus der Halterung sich beim Gebrauch selbsttätig herauslöst, so dass Verkratzungen auf der Frontscheibe mit der Vorrichtung unvermeidbar sind. Als weiterer wesentlicher Nachteil der bekannten Vorrichtung wird angesehen, dass dieses bekannte Produkt als Werbemittelträger von seinen Herstellungskosten her sehr hoch ausfällt.

Es ist daher die Aufgabe der Erfindung, hier die Nachteile zu überwinden und eine Vorrichtung für einen Fliegenschwamm derart weiterzubilden, die für den Benutzer einerseits eine ergonomische Handhabung ermöglicht, wobei andererseits auch gewährleistet werden soll, dass die Vorrichtung kostengünstig herzustellen ist.

Diese Aufgabe wird erfindungsgemäß durch die Merkmale des unabhängigen Anspruchs 1 gelöst. Die Ausbildung eines gespritzten nach vorne geöffneten Kunststoffgehäuses lässt sich im Spritzgussverfahren leicht und einfach herstellen, so dass hohe Stückzahlen gefertigt werden können, mit der Folge, dass sich eine kostengünstige Herstellung ergibt. Der Fliegenschwamm selbst wird dabei zur Halterung teilweise in das nach vorne geöffnete Gehäuse eingesetzt, so dass der Fliegenschwamm mit einem überstehenden Maß so weit aus dem Gehäuse hinausragt, dass er seine Reinigungsfähigkeit bei hinreichender Halterung behält. Ohne das bei der erfindungsgemäßen Vorrichtung Verstellarbeiten vorzunehmen sind, wird bei der erfindungsgemäßen Vorrichtung der Fliegenschwamm einfach von Hand in den nach vorne geöffneten Gehäusekörper eingesetzt, wobei dann sogleich die Vorrichtung einsetzbar ist.

Nach einer vorteilhaften Weiterbildung der Erfindung ist insbesondere das nach vorne geöffnete Gehäuse derart ausgebildet, dass der Fliegenschwamm selbstklemmend in dem nach vorne geöffneten Gehäuse eingefasst ist. Aufgrund der selbstklemmenden Ausbildung des Fliegenschwammes in dem Gehäuse lässt er sich auf einfache Weise leicht einsetzen, und auch nach einer gewissen Einsatzzeit für den Wechselvorgang leicht aus dem Gehäuse entfernen, wobei dann der Fliegenschwamm aufgrund seiner Kompressibilität leicht aus dem Gehäuse herausgequetscht werden kann und durch einen neuen Fliegenschwamm ersetzt werden kann, wobei dieser zunächst etwas komprimiert wird, so dass er gepresst in dem nach vorne geöffneten Gehäuse selbstklemmend eingefasst ist. Dies ermöglicht insbesondere einen schnellen und einfach Wechselvorgang des Fliegenschwammes.

Nach einer vorteilhaften Weiterbildung der Erfindung sind an den Seitenwänden spitze Zapfen angeformt, die sich in den eingelegten Fliegenschwamm drücken. Die angeformten spitzen Zapfen bewirken, dass der Fliegenschwamm sich nicht selbsttätig aus dem Gehäuse herausdrücken kann, wenn beispielsweise mit dem Fliegenschwamm bzw. mit der Vorrichtung eine stark verschmutzte Scheibe gereinigt wird. Der Fliegenschwamm lässt sich auf einfache Weise aufgrund seiner Flexibilität leicht in das Gehäuse einsetzen, wobei er zunächst zwischen den spitzen Zapfen zusammengedrückt wird, und sich dann selbsttätig zwischen die Zapfen eindrückt. Somit wird eine unverlierbare und stabile Halterung des Fliegenschwamms in dem Bereich des den Fliegenschwamm teilweise umgebenden Gehäuses erreicht.

In Weiterbildung der Erfindung entspricht der Öffnungsquerschnitt des Gehäuses den Abmessungen des Fliegenschwammes. Zur Halterung eines Griffelementes ist an der unteren Seitenwand des Gehäuses eine Aufnahme für das Griffelement angeformt. Dabei kann in vorteilhafter Weiterbildung der Erfindung, um die Zugänglichkeit der Vorrichtung für besonders große Scheiben günstig auszugestalten, das Griffelement als ein teleskopierbarer Rohrstab ausgebildet sein.

Um der Vorrichtung eine ergonomisch günstige Gestalt zu geben, ist das Griffelement unter einem Winkel verlaufend zum Gehäuse angeordnet. Hierdurch wird erreicht, dass die Gesamtfläche des Schwammes auf die Scheibe gedrückt werden kann, wobei auch ermöglicht wird, dass an hartnäckig verschmutzten Stellen ein Andrücken der Vor- oder der Rückkante des Fliegenschwammes für ein punktuelles Reinigen ermöglicht wird. Denn aufgrund der winkligen Stellung von Fliegenschwamm-Fläche zu Griffelement lässt sich infolge einer Hebelwirkung in Bezug zur Vorder- oder Rückkante des Fliegenschwammes eine punktuelle Druckstelle erzeugen, so dass selbst hartnäckig festsitzender Fliegendreck entfernt werden kann.

Nach einer besonders vorteilhaften Weiterbildung der Erfindung kann auf der Rückseite des Gehäuses ein zusäztlicher Weichschwamm angeordnet sein. Wird nun mittels der Fliegenschwammseite zunächst eine Grobreinigung der verschnutzten Scheibe vorgenommen, so dass sich zunächst der festsitzende Fliegendreck unter Einwirkung von Wasser und Reibbewegungen von der Scheibe ablöst, kann dann die Vorrichtung gewendet werden, um dann mit dem Weichschwamm nachzureinigen. Hierzu kann auch weiter an der Vorrichtung vorteilhaft vorgesehen sein, dass an der oberen Seitenwandung eine Gummilippe angeordnet ist. Ist die Feinreinigung mit dem Weichschwamm erfolgt, besteht mit der weiterentwickelten Vorrichtung auch die Möglichkeit, dass nun mittels der Gummilippe der auf der Scheibe aufliegende mit den Schmutzpartikeln versehene Wasserfilm abgezogen werden kann, so dass die mit Fliegendreck verschmutzte Scheibe gänzlich mit der erfindungsgemäßen Vorrichtung gereinigt werden kann.

Nach einer bevorzugten Ausführungsform kann die Gummilippe mittels einer abnehmbaren Klemmhalterung an der oberen Seitenwandung angeklipst sein. Eine abnehmbare Klemmhalterung für die Gummilippe vorzusehen, ermöglicht das nach einem gewissen Verschleißzeitraum die Gummilippe leicht an dem Gehäuse ausgewechselt werden kann, wobei auch eine Nachrüstung von bereits ausgelieferten Vorrichtungen möglich ist.

Ein Ausführungsbeispiel der Erfindung wird anhand der Figuren 1 bis 4 näher erläutert, dabei zeigen:
- Figur 1:: Eine perspektivische Frontansicht der erfindungsgemäßen Vorrichtung ohne Fliegenschwamm;
- Figur 2:: Eine Seitenansicht der Vorrichtung mit einem eingeklemmten Fliegenschwamm;
- Figur 3:: Eine Seitenansicht der Vorrichtung mit einem eingeklemmten Fliegenschwamm sowie einem auf der Rückseite angeordneten Weichschwamm, wobei an der oberen Seitenwandung eine Halterung für eine Gummilippe angeordnet ist;
- Figur 4:: Eine weitere Ausführungsform gemäß der Figur 3, wobei die Halterung für die Gummilippe abnehmbar ausgestaltet ist.

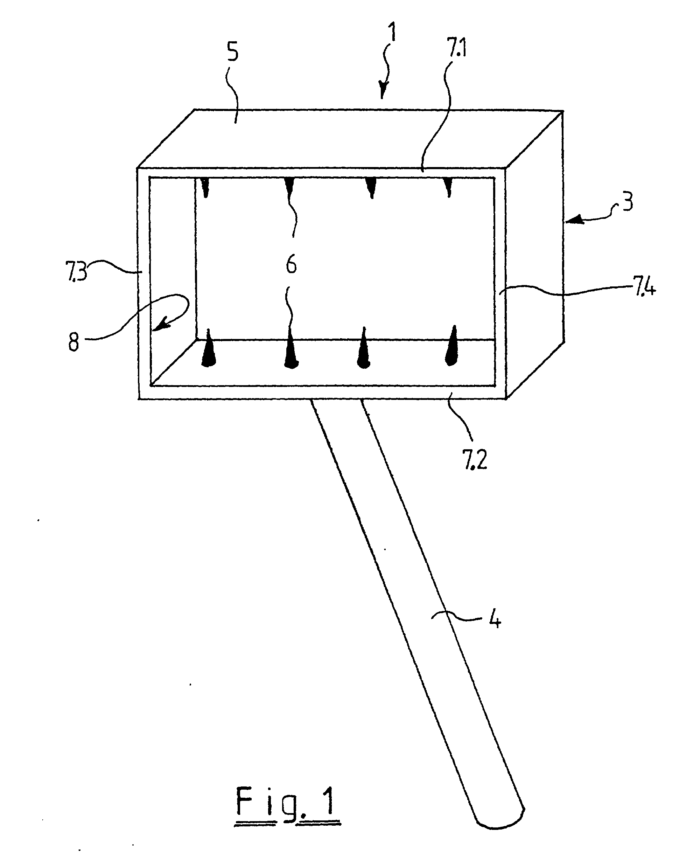

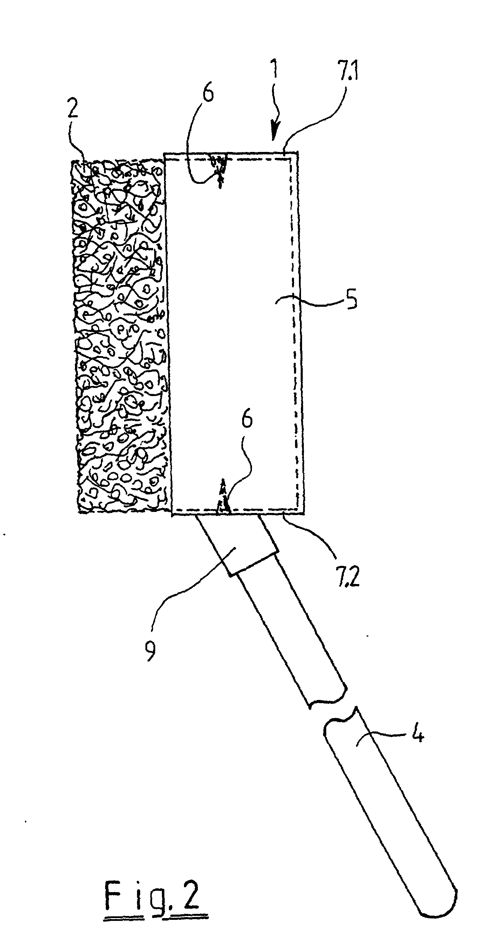

Die Figur 1 zeigt eine Vorrichtung 1 für einen Fliegenschwamm 2 in der Perspektive. Dabei besteht die Vorrichtung 1 aus einer Halterung 3, in die der Fliegenschwamm 2 einspannbar ist. An der Halterung 3 ist ein Griffelement 4 entweder eingeformt oder angeordnet. Erfindungsgemäß ist dabei die Halterung 3 aus einem einstückig gespritzten, nach vorne geöffneten Gehäuse 5 ausgebildet, in die der Fliegenschwamm 2 - dargestellt in der Seitenansicht der Figur 2 - teilweise eingesetzt ist.

Wie insbesondere aus den beiden Darstellungen der Figuren 1 und 2 zu erkennen ist, sind spitze Zapfen 6 insbesondere in den Darstellungen an der oberen Seitenwandung 7.1 sowie an der unteren Seitenwandung 7.2 des Gehäuses 5 angeformt. Denkbar ist aber auch hier beispielsweise die Zapfen 6 an den vertikal verlaufenden Seitenwände 7.3 und 7.4 anzuordnen, in die sich der Fliegenschwamm 2 im eingesetzten Zustand selbsttätig drückt. Durch seine Kompressibilität lässt sich der Fliegenschwamm 2 zusammendrücken, so dass er leicht von vorne in das geöffnete Gehäuse 5 und somit zwischen die Zapfen 6 eingebracht werden kann. Dabei lässt er sich im komprimierten Zustand zwischen die Zapfen 6 verbringen, wo er sich selbsttätig dann zwischen die Zapfen 6 in dem nach vorne geöffneten Gehäuse 5 einklemmt. In zweckmäßiger Weise ist der Öffnungquerschnitt 8 des Gehäuses 5 an die Abmessungen des Fliegenschwammes 2 angepasst, so dass der Fliegenschwamm 2 quasi formschlüssig in dem geöffneten Gehäuse 5 liegt und eingefasst ist. Somit kann einerseits die hinreichende Reibkraft auf die Scheibe aufgebracht werden, wobei andererseits der Fliegenschwamm 2 selbst in dem geöffneten Gehäuse 5 einen sicheren Halt erfährt.

In Weiterbildung der Erfindung ist insbesondere an der unteren Seitenwandung 7.2 des Gehäuses 5 nach außen eine Aufnahme 9 für das Griffelement 4 angeformt.

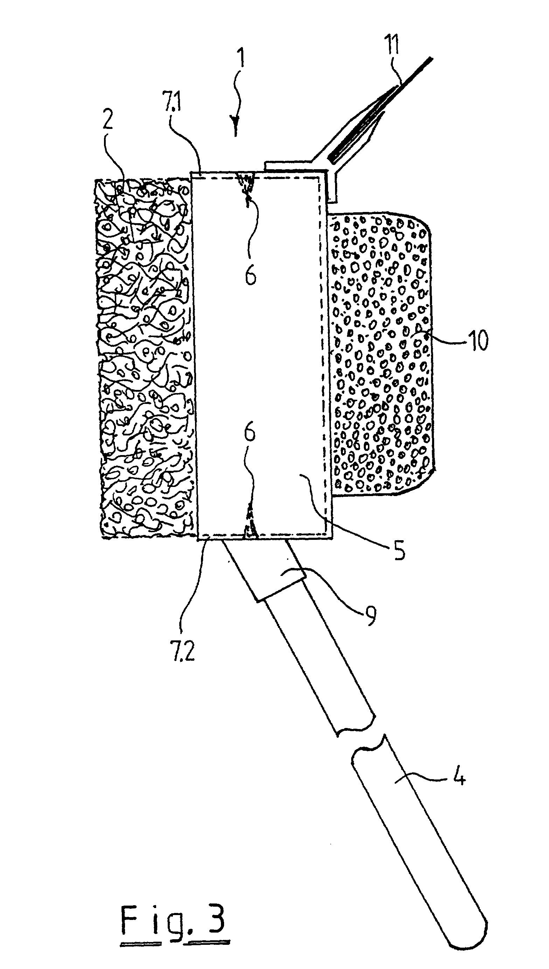

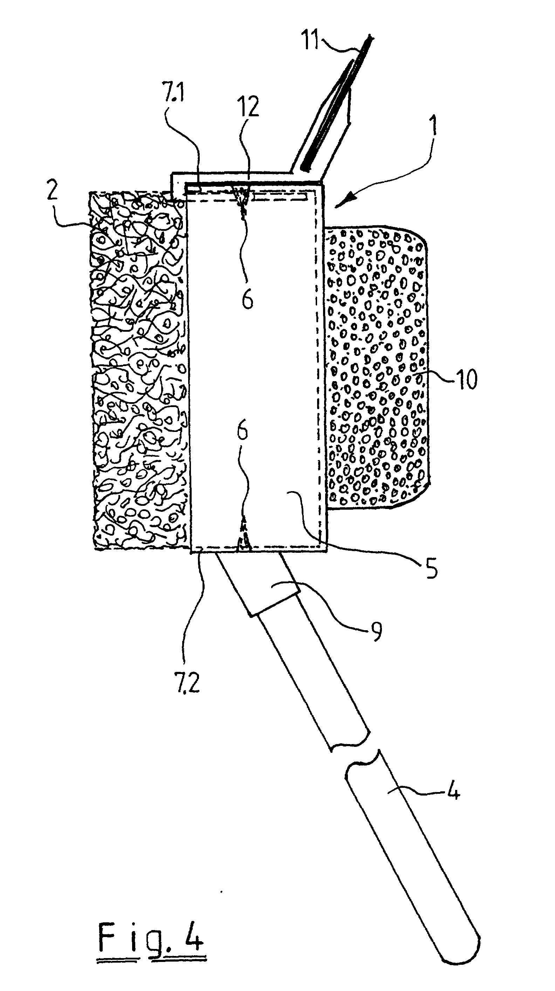

Wie aus den beiden Darstellungen der Figur 1 und 2 zu erkennen ist, ist das Griffelement 4 als ein Rohrstab ausgebildet, wobei der Rohrstab auch teleskopierbar ausgebildet sein kann. Wie insbesondere aus den Seitenansichten der Figur 2, 3 und 4 zu erkennen ist, ist das Griffelement 4 unter einem Winkel verlaufend zum Gehäuse 5 angeordnet. Auf der Rückseite des Gehäuses 5 kann, wie in der Figur 3 und 4 dargestellt ist, ein Weichschwamm 10 angeordnet sein. Dieser Weichschwamm 10 ist insbesondere zur Nachreinigung der mit dem Fliegenschwamm 2 vorgereinigten Scheibe bestimmt, so dass die von der Scheibe gelösten Partikel mittels des Weichschwammes 10 nachgereinigt werden können. Um die Frontscheibe des Fahrzeuges nach der Reinigung mit den Schwämmen 2 und 10 auch von dem Wasserfilm befreien zu können, ist an der oberen Seitenwandung 7.1 eine Gummilippe 11 angeordnet, um die vorgereinigte Scheibe von dem Wasserfilm zu befreien. In Weiterbildung ist die Gummilippe 11 mittels einer abnehmbaren Klemmhalterung 12, dargestellt in der Figur, 4 an der oberen Seitenwandung 7.1 anklipsbar. Dies ermöglicht auch nach einer gewissen Verbrauchszeit, dass die Gummilippe 11 leicht und einfach ausgewechselt werden kann, wobei mit der Klemmhalterung 12 auch Vorrichtungen 1 nachgerüstet werden können, wie sie gemäß der Ausführung dargestellt in der Figur 1 ausgebildet sind.

## Patentansprüche

1. Vorrichtung bestehend aus einem Fliegenschwamm (2), der aus einem grobporigen Material gefertigt ist und zum Lösen von auf Fahrzeugscheiben haftenden Insektenvesten verwendet wird, und einer Halterung (3), in die der Fliegenschwamm (2) einzespannt ist, wobei an der Halterung (3) ein Griffelement (4) angeordnet ist, **dadurch gekennzeichnet, dass** die Halterung (3) aus einem einstückig gespritzten nach vorne geöffneten Gehäuse (5) gebildet ist, dessen Öffnungsquerschnitt (8) den Abmessungen des Fliegenschwammes (2) entspricht, wobei der Fliegenschwamm (2) teilweise in das Gehäuse (5) eingesetzt ist, und wobei für das Griffelement (4) an der unteren Seitenwandung (7.2) des Gehäuses (5) eine Aufnahme (9) angeformt ist.

2. Vorrichtung nach Anspruch 1, **dadurch gekennzeichnet, dass** der Fliegenschwamm (2) selbstklemmend in dem nach vorne geöffneten Gehäuse (5) eingefasst ist.

3. Vorrichtung nach Anspruch 2, **dadurch gekennzeichnet, dass** spitze Zapfen (6) an den Seitenwänden (7.1) und (7.2) bzw. (7.3) und (7.4) des Gehäuses (5) angeformt sind, die sich in den eingelegten komprimierbaren Fliegenschwamm (2) drücken.

4. Vorrichtung nach Anspruch 1, **dadurch gekennzeichnet, dass** das Griffelement (4) unter einem Winkel verlaufend zum Gehäuse (5) angeordnet ist.

5. Vorrichtung nach Anspruch 4, **dadurch gekennzeichnet, dass** das Griffelement (4) als ein teleskopierbarer Rohrstab ausgebildet sein kann.

6. Vorrichtung nach einem oder mehreren der vorhergehenden Ansprüche 1 bis 5, **dadurch gekennzeichnet, dass** auf der Rückseite des Gehäuses (5) ein Weichschwamm (10) angeordnet ist.

7. Vorrichtung nach einem oder mehreren der vorhergehenden Ansprüche 1 bis 6, **dadurch gekennzeichnet, dass** an der oberen Seitenwandung (7.1) eine Gummilippe (11) angeordnet ist.

8. Vorrichtung nach Anspruch 7, **dadurch gekennzeichnet, dass** die Gummilippe (11) mittels einer abnehmbaren Klemmhalterung (12) an der oberen Seitenwandung (7.1) anklipsbar ist.

## Claims

1. Device comprising an insect removal sponge (2) made from a macroporous material and used for removing insect remains adhering to the windscreens of a vehicle, and a holding frame (3) in which the insect removal sponge is mounted, the holding frame (3) having provided thereon a handle member (4), **characterized in that** the holding frame (3) is formed from an integrally injection-moulded housing (5) which is open towards the front, the opening cross-section (8) of said housing corresponding to the dimensions of the insect removal sponge (2), the insect removal sponge (2) being partially inserted in the housing (5), and with a receptacle (9) for the handle member (4) being moulded onto the bottom side wall (7.2) of the housing (5).

2. Device as claimed in Claim 1, **characterized in that** the insect removal sponge (2) is accomodated in a self-fastening manner in the housing (5) which is open towards the front.

3. Device as claimed in Claim 2, **characterized in that** pointed pins (6) are moulded onto the side walls (7.1) and (7.2) or (7.3) and (7.4) of the housing (5), which pointed pins are urged into the inserted compressible insect removal sponge (2).

4. Device as claimed in Claim 1, **characterized in that** the handle member (4) is oriented in such a way that it extends at an angle relative to the housing (5).

5. Device as claimed in Claim 4, **characterized in that** the handle member (4) may be formed as a telescopic tubular rod.

6. Device as claimed in any one or more of the preceding Claims 1 to 5, **characterized in that** a soft sponge (10) is provided on the rear side of the housing (5).

7. Device as claimed in any one or more of the preceding Claims 1 to 6, **characterized in that** a rubber lip (11) is provided on the upper side wall (7.1).

8. Device as claimed in Claim 7, **characterized in that** the rubber lip (11) can be clipped on to the upper side wall (7.1) by means of a detachable clamping attachment (12).

## Revendications

1. Dispositif composé d'une éponge ramasse-mouches (2), qui est réalisée en une matière à pores grossiers et est utilisée pour détacher des restes d'insecte adhérant sur des vitres de véhicule, et d'un élément de maintien (3) dans lequel l'éponge ramasse-mouches (2) est serrée, un élément de préhension (4) étant disposé sur l'élément de maintien, **caractérisé en ce que** l'élément de maintien (3) est formé d'un boîtier (5), réalisé d'une seule pièce par injection et ouvert vers l'avant, dont la section transversale d'ouverture (8) correspond aux dimensions de l'éponge ramasse-mouches (2), l'éponge ramasse-mouches (2) étant emboîtée en partie dans le boîtier (5) et un logement (9) étant réalisé au formage, pour l'élément de préhension (4), sur la paroi latérale inférieure (7.2) du boîtier (5).

2. Dispositif suivant la revendication 1, **caractérisé en ce que** l'éponge ramasse-mouches (2) est enchâssée, par auto-coincement, dans le boîtier (5) ouvert vers l'avant.

3. Dispositif suivant la revendication 2, **caractérisé en ce que** des tétons (6) pointus sont réalisés au formage sur les parois latérales (7.1) et (7.2) ou (7.3) et (7.4) du boîtier (5), lesquels tétons pointus s'enfoncent par pression dans l'éponge ramasse-mouches (2) comprimable mise en place.

4. Dispositif suivant la revendication 1, **caractérisé en ce que** l'élément de préhension (4) est disposé en s'étendant selon un certain angle par rapport au boîtier (5).

5. Dispositif suivant la revendication 4, **caractérisé en ce que** l'élément de préhension (4) peut être réalisé sous forme d'une tige tubulaire télescopique.

6. Dispositif suivant une ou plusieurs des revendications précédentes 1 à 5, **caractérisé en ce qu'**une éponge souple (10) est disposée sur la face arrière du boîtier (5).

7. Dispositif suivant une ou plusieurs des revendications précédentes 1 à 6, **caractérisé en ce qu'**une lèvre en caoutchouc (11) est disposée sur la paroi latérale supérieure (7).

8. Dispositif suivant la revendication 7, **caractérisé en ce que** la lèvre en caoutchouc (11) peut être agrafée sur la paroi latérale supérieure (7.1) au moyen d'une fixation par pincement (12) amovible.
